# EUROPÄISCHE PATENTSCHRIFT

(11) **EP 2 114 743 B1**
(45) Veröffentlichungstag und Bekanntmachung des Hinweises auf die Patenterteilung: **26.10.2011**
(21) Anmeldenummer: 08716270.7
(22) Anmeldetag: 05.03.2008
(51) Int. Cl.: B61D 35/00, F16L 37/18, F16L 37/47

(54) **SCHLAUCHKUPPLUNG FÜR DIE FÄKALIENENTSORGUNG AN SCHIENENFAHRZEUGEN**
HOSE COUPLING FOR THE DISPOSAL OF FECAL MATTER IN TRACKED VEHICLES
RACCORD POUR TUYAUX CONÇU POUR L'ÉVACUATION DE MATIÈRES FÉCALES SUR DES VÉHICULES SUR RAILS

(30) Priorität: 08.03.2007 DE 102007011210
(43) Veröffentlichungstag der Anmeldung: 11.11.2009
(73) Patentinhaber: Haag, Werner, 27771 Osterholz-Scharmbeck (DE)
(72) Erfinder: Haag, Werner, 27771 Osterholz-Scharmbeck (DE)
(74) Vertreter: Wiebusch, Manfred
(86) Internationale Anmeldenummer: PCT/EP2008/001753
(87) Internationale Veröffentlichungsnummer: WO 2008/107177

(56) Entgegenhaltungen:
- EP-A- 1 329 370
- US-A- 2 770 474
- US-A- 3 664 634
- US-A- 4 077 656
- US-A- 5 505 428
- BOUTONNET J-C: "EINSATZ GESCHLOSSENER TOILETTENSYSTEME IN REISEZUGWAGEN DER FRANZOESISCHEN STAATSBAHNEN (SNCF). THE USE OF CLOSED-CIRCUIT TOILET SYSTEMS IN TRAVELLING CARRIAGES OFTHE FRENCH RALLWAYS (SNCF). L'APPLICATION DES SANITAIRES ETANCHES SUR LE MATERIEL FERROVIAIRE DE LA SNCF" ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 111, Nr. 3, 1. März 1987 (1987-03-01), Seiten 94-99, XP002043035 ISSN: 0941-0589

## Beschreibung

Die Erfindung betrifft eine Schlauchkupplung für Dickstoffe, insbesondere für die Fäkalienentsorgung an Schienenfahrzeugen, mit einem ersten Kupplungsteil und einem mechanisch daran verriegelbaren zweiten Kupplungsteil, und mit einem dem ersten Kupplungsteil zugeordneten Verschlußelement .

Schienenfahrzeuge weisen zum Sammeln von Fäkalien einen Sammelbehälter auf, aus dem die Fäkalien von Zeit zu Zeit abgesaugt werden müssen. Zu diesem Zweck wird an einen Stutzen des Sammelbehälters mit Hilfe einer Schlauchkupplung ein Absaugschlauch angeschlossen, so daß die Fäkalien mittels Unterdruck abgesaugt werden können. Bei der Schlauchkupplung handelt es sich um eine sogenannte Kamlock-Kupplung, deren Kupplungsteile durch an schwenkbaren Hebeln ausgebildete Nockenflächen miteinander verspannt und mechanisch miteinander verriegelt werden können, siehe beispielsweise den Artikel von Jean-Claude Boutonnet, "Einsatz geschlossener Toilettensysteme in Reisezugwagen der Französischen Staatsbahnen (SNCF)", Zeitschrift für Eisenbahnwesen und Verkehrstechnik, Die Eisenbahntechnik + Glasers Annalen, Georg Siemens Verlagsbuchhandlung, Berlin, DE, Bd. 111, Nr. 3, 1.März 1987, Seiten 94-99, ISSN: 0941-0589.

Da es sich bei dem geförderten Medium um Dickstoffe handelt, können hier weder Trockenkupplungen noch selbstschließende Schnellkupplungen eingesetzt werden, wie sie von Hydraulikanlagen bekannt sind. Um ein Absperren des schlauchseitigen Kupplungsteils zu ermöglichen, damit die abgesaugten Fäkalien nach dem Lösen der Kupplung nicht aus dem Schlauch austreten, wird eine Kamlock-Kupplung mit nachgeschaltetem Kugelhahn verwendet.

Dieser Kugelhahn, dessen kugelförmiges Kücken am stromaufwärtigen und am stromabwärtigen Ende abgedichtet werden muß, sitzt bisher in einem beträchtlichen Abstand zu der Teilungsebene der beiden Kupplungsteile im Gehäuse des schlauchseitigen Kupplungsteils. Das hat den Nachteil, daß zwischen dem Kugelhahn und der Teilungsebene ein beträchtlicher Totraum gebildet wird, in dem Fäkalien zurückbleiben können, die nach dem Lösen der Kupplung auch bei geschlossenem Kugelhahn aus diesem Totraum austreten können.

Der Stutzen des Sammelbehälters mit dem daran angeordneten fahrzeugseitigen Kupplungsteil ist in der Regel annähernd waagerecht orientiert. Nach dem Lösen der Kupplung können daher auch an dem fahrzeugseitigen Kupplungsseil unerwünschte Tropfverluste auftreten.

Die auf diese Weise austretenden Fäkalienreste stellen eine Quelle von unerwünschten Geruchsbelästigungen dar und sind sowohl unter hygienischen Gesichtspunkten wie auch unter Gesichtspunkten des Gewässerschutzes problematisch. Maßnahmen zum Auffangen dieser Fäkalienreste und Tropfverluste, wie das Unterstellen von Auffangwannen und dergleichen, sind relativ aufwendig und kostspielig und bieten keine hohe Sicherheit.

Aufgabe der Erfindung ist es deshalb, eine Schlauchkupplung zu schaffen, mit der das Austreten von Fäkalien oder sonstigen Dickstoffen nach dem Lösen der Kupplung weitgehend vermieden werden kann.

Diese Aufgabe wird erfindungsgemäß dadurch gelöst, daß das Verschlußelement unmittelbar an der Teilungsebene zwischen den Kupplungsteilen angeordnet ist und daß eine Durchlaßöffnung des Verschlußelements im geöffneten Zustand in eine Hülse mündet, die über die Teilungsebene hinaus vorspringt und in eine Querschnittsverengung des zweiten Kupplungsteils eingreift.

Durch die Anordnung des Verschlußelements unmittelbar an der Teilungsebene, d.h. an der Ebene der Mündung des in dem ersten Kupplungsteil aufgenommenen zweiten Kupplungsteils, wird der Totraum nahezu vollständig beseitigt, so daß die Menge an Fäkalien, die nach dem Lösen der Kupplung aus diesem Totraum austreten kann, auf ein Minimum reduziert wird.

Das Verschlußelement dichtet auf der dem zweiten Kupplungsteil zugewandten Seite an der vorspringenden Hülse ab, die einen deutlich kleineren Querschnitt als das Gehäuse des Kupplungsteils hat und somit keinen nennenswerten Totraum verursacht. Durch den Eingriff dieser Hülse in die Querschnittsverengung des zweiten Kupplungsteils wird ein ringsum abgedichteter Durchlaß für die abgesaugten Fäkalien gebildet. Nach dem Lösen der Kupplung stellt die Querschnittsverengung eine Barriere dar, die das Auslaufen von Fäkalienresten aus dem zweiten Kupplungsteil weitgehend verhindert. Insgesamt wird somit durch diese Anordnung der Austritt von Fäkalien auf ein Mindestmaß reduziert.

Vorteilhafte Ausgestaltungen und Weiterbildungen der Erfindung sind in den Unteransprüchen angegeben.

Wenn die Schlauchkupplung für die Fäkalienentsorgung an Schienenfahrzeugen eingesetzt wird, so ist vorzugsweise das zweite Kupplungsteil am Stutzen des Fäkalienbehälters des Fahrzeugs angeordnet.

Die erfindungsgemäße Schlauchkupplung hat dann auch den Vorteil, daß das erste, schlauchseitige Kupplungsteil mit den bisher an den Schienenfahrzeugen vorhandenen Kupplungsteilen kompatibel ist, so daß die Umrüstung auf die erfindungsgemäßen Schlauchkupplungen nach und nach erfolgen kann.

In einer besonders bevorzugten Ausführungsform wird die Querschnittsverengung durch eine unmittelbar an der Teilungsebene angeordnete ringförmige elastische Membran gebildet, die im eingekuppelten Zustand von der Hülse des schlauchseitigen Kupplungsteils elastisch aufgeweitet und durchstoßen wird. Die Membran legt sich dann im eingekuppelten Zustand wie eine Dichtmanschette um die Hülse. Nach dem Lösen der Kupplung nimmt die Membran eine ebene Gestalt an, so daß dann der Innenquerschnitt der ringförmigen Membran noch stärker verengt wird. Hierdurch lassen sich Tropfverluste besonders wirksam vermeiden, insbesondere auch dann, wenn der Stutzen des Sammelbehälters zur Mündung des Kupplungsteils hin ein Gefälle aufweist. Da die Membran im eingekuppelten Zustand durch die Hülse aufgeweitet wird, kann die Hülse dennoch einen vergleichsweise großen Durchlaßquerschnitt für die Fäkalien bieten.

Im folgenden werden Ausführungsbeispiele der Erfindung anhand der Zeichnung näher erläutert.

Es zeigen:
- Fig. 1: eine zur Hälfte aufgeschnittene Seitenansicht der Schlauchkupplung im eingekuppelten Zustand;
- Fig. 2: eine Darstellung analog zu Fig. 1 für den auskuppelten Zustand der Kupplung;
- Fig.3: eine Explosions-Schnittdarstellung eines Kupplungsteils mit Membran gemäß einer abgewandelten Ausführungsform, und
- Fig. 4 und 5: Frontansichten von Membranen des Kupplungsteils in unterschiedlichen Ausführungsformen.

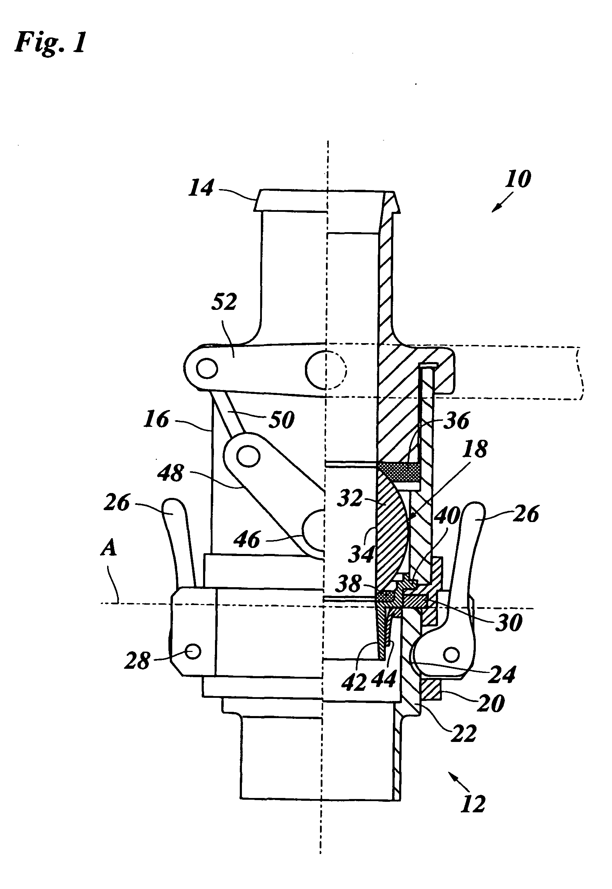

Die in Fig. 1 gezeigte Schlauchkupplung weist ein schlauchseitiges (erstes) Kupplungsteil 10 und ein fahrzeugseitiges (zweites) Kupplungsteil 12 auf. Das schlauchseitige Kupplungsteil 10 ist durch eine Tülle 14 mit einem nicht gezeigten Absaugschlauch verbunden, während das fahrzeugseitige Kupplungsteil 12 fest an einem nicht gezeigten, in der Praxis annähernd waagerecht orientierten Stutzen eines Fäkalienbehälters eines Schienenfahrzeugs angeordnet ist. Die beiden Kupplungsteile bilden zusammen eine Kamlock-Kupplung von an sich bekannter Bauart.

Das schlauchseitige Kupplungsteil 10 weist ein dicht mit der Tülle 14 verschraubtes rohrförmiges Gehäuse 16 auf, das einen integrierten Kugelhahn 18 als Verschlußelement aufnimmt. Das stromaufwärtige, in der Zeichnung untere Ende des Gehäuses 16 ist dicht mit einer Mutter 20 verschraubt, die das Ende des fahrzeugseitigen Kupplungsteils 12 übergreift.

Das fahrzeugseitige Kupplungsteil 12 hat die Form eines Rohres mit einer im Bereich der Mündung verdickten Wand 22. In der äußeren Umfangsfläche dieser Wand 22 ist eine umlaufende, im Querschnitt annähernd halbkreisförmige Nut 24 gebildet. An der Mutter 20 sind zwei Verriegelungshebel 26 schwenkbar gelagert. Diese Verriegelungshebel bilden jeweils in der Nähe ihrer Lagerstelle 28 einen Nocken, der nach dem bekannten Prinzip einer Kamlock-Kupplung in die Nut 24 eingreift, um die Kupplungsteile miteinander zu verriegeln. Wenn die Verriegelungshebel 26 aufwärts in die in Fig. 1 gezeigte Position geschwenkt werden, treten die Nocken in die Nut 24 ein und gleiten dabei auf die gekrümmte Innenfläche der Nut auf, so daß durch Keilwirkung das schlauchseitige Kupplungsteil 10 fest gegen die Mündung des fahrzeugseitigen Kupplungsteils 12 gespannt wird. Die Ebene dieser Mündung bildet die Teilungsebene der Kupplung und ist mit A bezeichnet.

In die Mutter 20 ist eine Dichtung 30 eingesetzt, die an der Stirnfläche des fahrzeugseitigen Kupplungsteils 12 abdichtet.

Die Besonderheit der hier beschriebenen Schlauchkupplung besteht darin, daß der Kugelhahn 18 unmittelbar an der Teilungsebene A angeordnet ist. Der Kugelhahn 18 ist in Fig. 1 im geöffneten Zustand gezeigt und weist eine Kugel 32 mit einer Durchlaßöffnung 34 auf, die mit dem Innenquerschnitt der Tülle 14 fluchtet. Das obere Ende der Durchlaßöffnung 34 ist durch eine an die Kugelform angepaßte Dichtung 36 gegenüber der Einheit aus Tülle 14 und Gehäuse 16 abgedichtet. Eine entsprechende Dichtung 38 für das untere Ende der Durchlaßöffnung ist in einem ringförmigen Einsatz 40 angeordnet, der zwischen dem Gehäuse 16 und der Mutter 20 gehalten ist und eine Hülse 42 bildet, die über die Teilungsebene A hinaus in das fahrzeugseitige Kupplungsteil 12 vorspringt. Der Innenquerschnitt der Hülse 42 fluchtet auf der der Durchlaßöffnung 34 zugewandten Seite mit dieser Durchlaßöffnung und ist zum stromaufwärtigen, unteren Ende hin konisch erweitert.

In der Wand 22 des fahrzeugseitigen Kupplungsteils 12 ist eine ringförmige elastische Membran 44 gehalten, die in Fig. 1 von der Hülse 42 durchstoßen wird, so daß ihr innerer Bereich nach unten umgelenkt und elastisch aufgewertet ist. Die Membran 44 bildet somit eine Manschette, die die Hülse 42 dicht umschließt.

Auf der linken Seite in Fig. 1 sind wesentliche Teile eines Betätigungsmechanismus für den Kugelhahn 18 dargestellt. In der Wand des Gehäuses 16 ist ein Mitnehmer 46 gelagert, mit dem sich die Kugel 32 um 90° um eine senkrecht zur Zeichenebene in Fig. 1 verlaufende Achse drehen läßt. Ein radial von dem Mitnehmer 46 ausgehender Hebel 48 ist über eine Gelenkstange 50 mit einem kürzeren Ende eines Betätigungshebels 52 verbunden, der im Übergangsbereich zwischen Gehäuse 16 und Tülle 14 schwenkbar gelagert ist. Der Betätigungshebel 52 ist vorzugsweise als Bügel gestaltet, der das Kupplungsteil 10 gabelförmig umgreift.

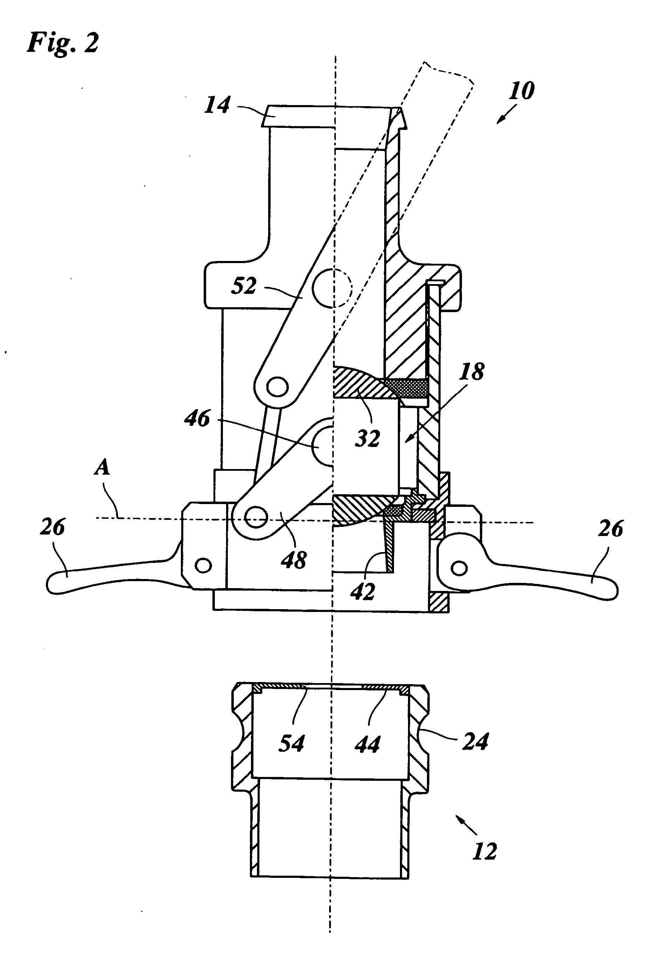

In Fig. 2 ist die Schlauchkupplung mit geschlossenem Kugelhahn und in ausgekuppeltem Zustand gezeigt.

Vor dem Lösen der Kupplung wird zunächst der Kugelhahn 18 geschlossen. Dazu wird der Betätigungshebel 52 im Gegenuhrzeigersinn in die in Fig. 2 gezeigte Position verschwenkt, so daß über den Hebel 48 der Mitnehmer 46 und damit auch die Kugel 32 um 90° gedreht wird. Die Durchlaßöffnung der Kugel liegt dann quer zwischen den Dichtungen 36 und 38, so daß keine Fäkalienreste aus der Durchlaßöffnung austreten können. Wenn sich der Rand der Durchlaßöffnung beim Schließen des Kugelhahns an diesen Dichtungen vorbei bewegt, können Feststoffe wie Papier oder dergleichen abgeschert werden.

Wie in Fig. 2 deutlich zu erkennen ist, grenzt die Kugel 32 unmittelbar an die Teilungsebene A an, und ihr unterer Scheitel liegt im gezeigten Beispiel sogar etwas jenseits dieser Teilungsebene. Sämtliche Fäkalien, die sich im Schlauch oder in der Tülle 14 befinden, werden deshalb durch den Kugelhahn sicher zurückgehalten, und außerhalb des Kugelhahns, am unteren Ende des Kupplungsteils 10 in Fig. 2, besteht praktisch kein Totraum, in dem sich Fäkalienreste befinden könnten.

Allenfalls könnten sich geringfügige Fäkalienrückstände in der Hülse 42 befinden. Da sich der Innenquerschnitt dieser Hülse jedoch nach außen konisch erweitert, werden diese flüssigen Rückstände bei im wesentlichen waagerechter Anordnung der Schlauchkupplung durch Schwerkraft in das Innere des Kupplungsteils 12 zurückfließen. Solange die Kupplung noch eingekuppelt ist und die Hülse 42 außen von der Membran 44 umschlossen ist, gelangen diese Rückstände folglich in den Innenraum des Kupplungsteils 12, der durch die Membran 44 abgeschlossen ist.

Zum Lösen der Kupplung werden die Verriegelungshebel 26 in die in Fig. 2 gezeigte Position geschwenkt, so daß sie die Nut 24 des Kupplungsteils 12 freigeben. Die Kupplungsteile lassen sich dann axial auseinanderziehen, wie in Fig. 2 dargestellt ist. Dabei wird die Hülse 42 aus der Membran 44 herausgezogen und diese Membran nimmt automatisch ihre unbelastete, im wesentlichen ebene Konfiguration ein, in der sie die Mündung des Kupplungsteils 12 bis auf eine verhältnismäßig enge Öffnung 54 verschließt. Somit werden die Fäkalienreste wirksam im Inneren des Kupplungsteils 12 zurückgehalten, und Tropfverluste werden auf ein Minimum reduziert.

Die Länge der Hülse 42 ist so an die Konfiguration der Membran 44 angepaßt, daß im eingekuppelten Zustand (Fig. 1) die umgebogene Membran mit ihrem inneren Rand an der Außenfläche der Hülse 42 anliegt, ohne über die Hülse überzustehen. Je länger die Hülse 42 gemacht wird, desto kleiner kann folglich der Innenradius der ringförmigen Membran 44 gemacht werden, um Tropfverluste sicher auszuschließen. Allerdings vergrößert sich dabei das Innenvolumen der Hülse 42, in dem sich Fäkalienrückstände befinden könnten, die nicht durch den Kugelhahn zurückgehalten werden können. In der Praxis werden deshalb die Hülse 42 und die Membran 44 so gestaltet, daß einerseits Tropfverluste weitgehend vermieden werden, andererseits jedoch kein zu großer Totraum in der Hülse 42 entsteht, so daß insgesamt die Austrittswahrscheinlichkeit von Fäkalien minimiert wird.

In dem in Fig. 1 und 2 gezeigten Beispiel weist die Membran am äußeren Umfang einen Metallring auf, der im Preßsitz in dem Kupplungsteil 12 gehalten ist und an den der elastische Teil der Membran (Gummi) anvulkanisiert ist.

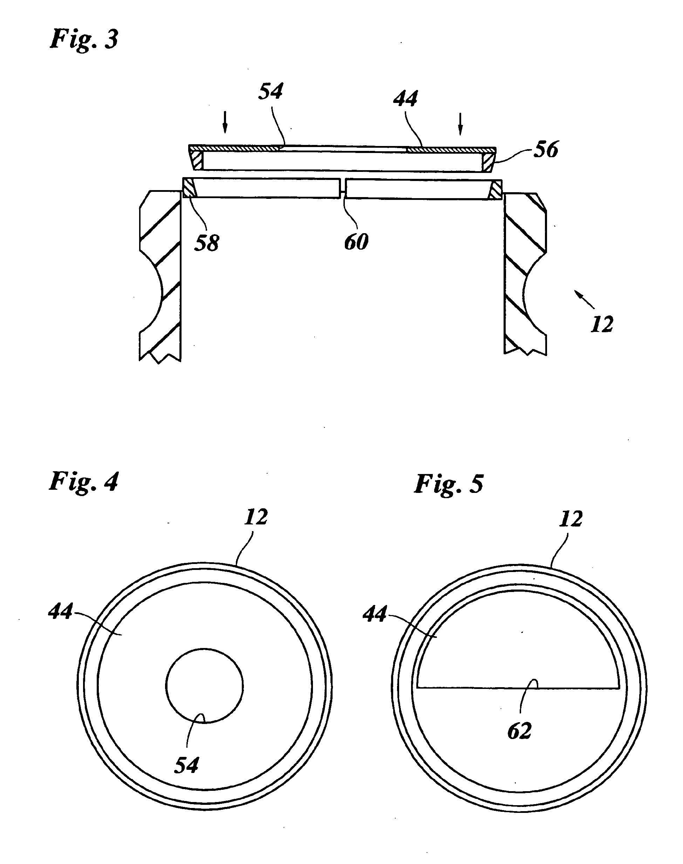

Fig. 3 zeigt eine Ausführungsform, bei der die Membran 44 an einen Konus 56 anvulkanisiert ist, dessen Außendurchmesser etwas kleiner ist als der Innendurchmesser des Kupplungsteils 12. Zur Fixierung der Membran dient ein Keilring 58 in den die Membran mit ihrem Konus 56 eingedrückt wird. Der Keilring 58 ist an einer Stelle durch einen Schlitz 60 unterbrochen, so daß er durch den Konus elastisch aufgeweitet wird und sich dann fest an die Innenwand des Kupplungsteils legt. Auf diese Weise wird die Membran klemmend gehalten. Diese Lösung hat den Vorteil, daß die Wand des Kupplungsteils größere Maßtoleranzen aufweisen darf und die Membran ggf. auch noch nachträglich an dem bereits am Fahrzeug angebrachten Kupplungsteil montiert werden kann.

Fig. 4 und 5 zeigen unterschiedliche Gestaltungen der Öffnung der Membran 44. In Fig. 4 ist die Öffnung 54 kreisförmig, und ihr Durchmesser beträgt etwas weniger als ein Drittel des Außendurchmessers der Membran. In Fig. 5 ist statt dessen eine etwa halbkreisförmige Öffnung 62 vorgesehen, die die obere Hälfte des Querschnitts einnimmt, so daß im unteren Teil eine wirksame Barriere für die Fäkalien gebildet wird.

Die Membran 44 ist vorzugsweise auf ihrer der Hülse 42 zugewandten Seite mit einer reibungsarmen Beschichtung, beispielsweise aus PTFE versehen, damit sie sich leichter elastisch aufweiten läßt.

## Patentansprüche

1. Schlauchkupplung für Dickstoffe, insbesondere für die Fäkalienentsorgung an Schienenfahrzeugen, mit einem ersten Kupplungsteil (10) und einem mechanisch daran verriegelbaren zweiten Kupplungsteil (12), und mit einem dem ersten Kupplungsteil (10) zugeordneten Verschlußelement (18), **dadurch gekennzeichnet, daß** das Verschlußelement (18) unmittelbar an der Teilungsebene (A) zwischen den Kupplungsteilen (10, 12) angeordnet ist und daß eine Durchlaßöffnung (34) des Verschlußelements (18) im geöffneten Zustand in eine Hülse (42) mündet, die über die Teilungsebene (A) hinaus vorspringt und in eine Querschnittsverengung des zweiten Kupplungsteils (12) eingreift.

2. Schlauchkupplung nach Anspruch 1, **dadurch gekennzeichnet, daß** das erste Kupplungsteil (10) ein schlauchseitiges Kupplungsteil ist.

3. Schlauchkupplung nach einem der vorstehenden Ansprüche, **dadurch gekennzeichnet, daß** die Querschnittsverengung durch eine an der Teilungsebene (A) in das zweite Kupplungsteil (12) eingesetzte elastische Membran (44) gebildet wird, die im eingekuppelten Zustand von der Hülse (42) elastisch aufgeweitet wird.

4. Schlauchkupplung nach Anspruch 3, **dadurch gekennzeichnet, daß** die Membran (44) ringförmig ist, mit einem Innenradius, der weniger als die Hälfte, vorzugsweise weniger als ein Drittel des Außenradius beträgt.

5. Schlauchkupplung nach Anspruch 3, **dadurch gekennzeichnet, daß** die Membran (44) im oberen Teil eine etwa halbkreisförmige Öffnung (62) aufweist.

6. Schlauchkupplung nach einem der Ansprüche 3 bis 5, **dadurch gekennzeichnet, daß** die Membran (44) auf der der Hülse (42) zugewandten Seite eine reibungsarme Beschichtung aufweist.

7. Schlauchkupplung nach einem der vorstehenden Ansprüche, **dadurch gekennzeichnet, daß** sich der Innenquerschnitt der Hülse (42) in Richtung auf das zweite Kupplungsteil (12) erweitert.

8. Schlauchkupplung nach einem der vorstehenden Ansprüche, **dadurch gekennzeichnet, daß** das Verschlußelement (18) ein Kugelhahn ist.

9. Schlauchkupplung nach Anspruch 8, **dadurch gekennzeichnet, daß** eine Dichtung (38) für die Kugel (32) des Kugelhahns (18) in einem ringförmigen Einsatz (40) gehalten ist, der die Hülse (42) bildet.

10. Schlauchkupplung nach Anspruch 9, **dadurch gekennzeichnet, daß** das erste Kupplungsteil (10) ein rohrförmiges Gehäuse (16) und eine damit verschraubte Mutter (20) aufweist, die im eingekuppelten Zustand das zweite Kupplungsteil (12) übergreift, und daß der Einsatz (40) axial zwischen dem Gehäuse (16) und der Mutter (22) gehalten ist.

11. Schlauchkupplung nach einem der vorstehenden Ansprüche, **dadurch gekennzeichnet, daß** die Kupplungsteile (10, 12) eine Kamlock-Kupplung bilden.

## Claims

1. Hose coupling for thick matter, in particular for the disposal of fecal matter in tracked vehicles, comprising a first coupling member (10) and a second coupling member (12) mechanically lockable to the first coupling member, and a closure member (18) associated with the first coupling member (10), **characterized in that** the closure member (18) is arranged directly at the partition plane (A) between the coupling members (10, 12), and **in that** a feedthrough opening (34) of the closure member (18), in the open state thereof, leads into a sleeve (42) that projects beyond the partition plane (A) and engages into a reduced cross-section part of the second coupling member (12).

2. Hose coupling according to claim 1, **characterized in that** the first coupling member (10) is a hose-side coupling member.

3. Hose coupling according to any of the preceding claims, **characterized in that** the reduced cross-section part is formed by an elastic diaphragm (44) fitted into the second coupling member (12) at the partition plane (A), which diaphragm is elastically expanded by the sleeve (42) in the coupled state.

4. Hose coupling according to claim 3, **characterized in that** the diaphragm (44) is annular and has an internal radius that amounts to less than one half, preferably less than one third of the outer radius.

5. Hose coupling according to claim 3, **characterized in that** the diaphragm (44) has an approximately semi-circular opening (62) in its upper part.

6. Hose coupling according to any of the claims 3 to 5, **characterized in that** the diaphragm (44) has a low-friction coating on the side facing the sleeve (42).

7. Hose coupling according to any of the preceding claims, **characterized in that** the internal cross-section of the sleeve (42) increases towards the second coupling member (12).

8. Hose coupling according to any of the preceding claims, **characterized in that** the closure member (18) is a ball cock.

9. Hose coupling according to claim 8, **characterized in that** a seal (38) for the ball (32) of the ball cock (18) is held in an annular insert (40) that forms the sleeve (42).

10. Hose coupling according to claim 9, **characterized in that** the first coupling member (10) has a tubular casing (16) and a nut (20) in screw-thread engagement therewith, which nut straddles the second coupling member (12) in the coupled state, and **in that** the insert (40) is held axially between the casing (16) and the nut (20).

11. Hose coupling according to any of the preceding claims, **characterized in that** the coupling members (10, 12) form a Camlock coupling.

## Revendications

1. Raccord de flexible pour des matières consistantes, en particulier pour l'évacuation de matières fécales dans des véhicules sur rails, comprenant une première partie de raccord (10) et une seconde partie de raccord (12) pouvant être verrouillée mécaniquement sur la première, et un élément de fermeture (18) associé à la première partie de raccord (10), **caractérisé en ce que** l'élément de fermeture (18) est disposé directement sur le plan de séparation (A) entre les parties de raccord (10, 12) et **en ce qu'**une ouverture de passage (34) de l'élément de fermeture (18) débouche, dans l'état ouvert, dans un manchon (42), qui fait saillie au-delà du plan de partage (A) et s'engage dans un rétrécissement de section de la seconde partie de raccord (12).

2. Raccord de flexible selon la revendication 1, **caractérisé en ce que** la première partie de raccord (10) est une partie de raccord côté flexible.

3. Raccord de flexible selon l'une des revendications précédentes, **caractérisé en ce que** le rétrécissement de section est formé par une membrane (44) élastique insérée sur le plan de séparation (A) dans la seconde partie de raccord (12), laquelle membrane est élargie élastiquement par le manchon (42) dans l'état accouplé.

4. Raccord de flexible selon la revendication 3, **caractérisé en ce que** la membrane (44) a une forme annulaire, avec un rayon intérieur qui est inférieur à la moitié, de préférence inférieur à un tiers du rayon extérieur.

5. Raccord de flexible selon la revendication 3, **caractérisé en ce que** la membrane (44) présente dans la partie supérieure une ouverture (62) en forme de demi-cercle.

6. Raccord de flexible selon l'une des revendications 3 à 5, **caractérisé en ce que** la membrane (44) présente un revêtement peu sujet au frottement sur le côté tourné vers le manchon (42).

7. Raccord de flexible selon l'une des revendications précédentes, **caractérisé en ce que** la section intérieure du manchon (42) s'élargit en direction de la seconde partie de raccord (12).

8. Raccord de flexible selon l'une des revendications précédentes, **caractérisé en ce que** l'élément de fermeture (18) est un robinet à boisseau sphérique.

9. Raccord de flexible selon la revendication 8, **caractérisé en ce qu'**un joint (38) destiné à la sphère (32) du robinet à boisseau sphérique (18) est maintenu dans un insert (40) de forme annulaire, qui forme le manchon (42) .

10. Raccord de flexible selon la revendication 9, **caractérisé en ce que** la première partie de raccord (10) présente un boîtier (16) en forme de tuyau et un écrou (20) vissé à celui-ci, qui recouvre la seconde partie de raccord (12) dans l'état accouplé, et **en ce que** l'insert (40) est maintenu axialement entre le boîtier (16) et l'écrou (22).

11. Raccord de flexible selon l'une des revendications précédentes, **caractérisé en ce que** les parties de raccord (10, 12) forment un raccord Kamlock.
